# EUROPEAN PATENT APPLICATION

(11) **EP 2 918 822 A1**
(43) Date of publication of application: **16.09.2015**
(21) Application number: 13853748.5
(22) Date of filing: 05.11.2013
(51) Int. Cl.: F03B 17/02

(54) **FLOATING BUOY TURNOVER HYDRAULIC POWER OUTPUT DEVICE**

(30) Priority: 06.11.2012 CN 201210437933
(71) Applicant: Zhang, Weiguo, Jiangxi 330096 (CN)
(72) Inventor: Zhang, Weiguo, Jiangxi 330096 (CN)
(74) Representative: Sun, Yiming
(86) International application number: PCT/CN2013/086526
(87) International publication number: WO 2014/071826

(57) **Abstract**

A floating buoy turnover hydraulic power output device, comprising a buoy (1), an outer frame support (2), support stands (35, 36), a power turnover mechanism (27), and a hydraulic actuator (41). The upper end and lower end of the buoy (1) are respectively provided with an upper connecting rod (5) and a lower connecting rod (6) respectively connected with pistons (7, 8) of two hydraulic cylinders (3, 4) on the upper part and lower part of the outer frame support (2). Oil inlets and outlets of the hydraulic cylinders (3, 4) are respectively installed with one-way valves (13, 14, 15, 16). The one-way valves (13, 14, 15, 16) are respectively connected to a hydraulic oil tank (40) and a high pressure accumulator (42) via high pressure oil pipes (17, 18). The outer frame support (2) has a pass-through structure. Rotary shafts (23, 24) are installed in the middle of the outer frame support (2), and are slidably connected to the outer frame support (2). The power turnover mechanism (27) is connected to the rotary shafts (23, 24). The device can continuously and circularly rotate around the rotary shafts (23, 24) under little external force, and can release the buoy (1) during the rotation to convert buoyancy potential energy into hydraulic energy. Combined use of a set of the devices can continuously force hydraulic oil into the high pressure accumulator (42) for direct use.

## Description

### FIELD OF THE TECHNOLOGY

The present application relates to a power source conversion device, and in particular to a floating buoy turnover hydraulic power output device for converting buoyancy potential energy into hydraulic energy.

### BACKGROUND

There are a lot of solar, wind, hydro, tidal and other renewable energy sources in the nature. However, those energy sources have high energy dispersion, low level of utilization, and low efficiency in energy conversion. Nowadays, hydraulic power basically uses water as gravitational potential energy to generate energy. The above-mentioned renewable energy sources are not controllable. Hydro power generation is often limited by natural condition. Their construction and utilization are not very convenient. However, water as a clean energy can contain a huge buoyancy potential energy. If the buoyancy potential energy is utilized, it can greatly improve the efficiency. In response to national energy strategy to vigorously promote energy conservation and efficient energy technology innovation, the present invention is a pioneer of new thoughts on energy development and improvement of efficiency of energy conversion.

Chinese Patent CN201210110047.4 provides a device for converting buoyancy potential energy of a non-traditional power source into power output. It discloses a strong submerge-type energy conversion power output apparatus. The apparatus includes a buoyancy tank, a buoyancy conversion power unit, a turnover track, a guide rail, a submergence drive control shaft, a submergence position lock, and an anti-buoyant position lock. The control mechanism can be turned over by the buoyancy conversion power unit. This achieves the conversion of buoyancy energy to mechanical energy. Weight adjustment can make it possible to use little energy input to generate a lot of buoyancy potential energy. Instant mechanical energy conversion can be utilized or can be used to generate electricity. However, the structure of the buoyancy potential energy conversion device is complicated. Friction and wearing of various components are large, and efficiency of energy conversion is not high. The buoyancy potential energy conversion device is difficult to control and become industrialized.

### SUMMARY

The technical problem to be solved is to provide a high efficient output device which is simple in structure, easy to operate, less in friction and wearing, high in energy conversion efficiency, more stable and reliable, able to more fully convert buoyancy potential energy to industrialized hydraulic power.

The device of the present application can solve the above-mentioned technical problems by implementing the following technical solutions. The device of the present application may include a buoy, an outer frame support, support stands, a power turnover mechanism, and a transmission mechanism. An upper end and a lower end of the buoy may be provided respectively with an upper connecting rod and a lower connecting rod, which may be connected with pistons of hydraulic cylinders provided on upper part and lower part of the outer frame support respectively. The outer frame support may be provided at a periphery of the buoy and formed by bottom plates and a plurality of fixing rod. The outer frame support may be provided with rotary shafts, and may be connected to the support stands through the rotary shafts. The power turnover mechanism may be connected to the rotary shaft. Oil inlets and oil outlets of the hydraulic cylinders are respectively installed with one-way valves. The transmission mechanism may include hydraulic cylinders, one-way valves, high pressure oil pipes, a hydraulic oil tank, a hydraulic actuator and a high pressure oil accumulator.

For better results, the device of the present application can also implement the following technical measures. The rotary shafts can be formed on slidable connectors slidably connected to the outer frame support, and a pushing device may be provided between the support stands. Pushing device can be a pressing plate or a pushing rod. Rotary shafts can be provided with bearings and connected with support stands through the bearings. The rotary shafts may have a hollow portion, and high pressure oil pipes can pass through the hollow portions of the rotary shafts, and connected to a hydraulic oil tank and a high pressure oil accumulator through rotary couplers respectively. A flow switch may be provided between the rotary coupler and the hydraulic oil tank. A hydraulic control valve may be provided between the rotary coupler and the high pressure oil accumulator. The buoy may be movably connected with at least a pair of guide rods provided on corresponding positions on an inner side of the outer frame support. Turnover buoys may be provided on the bottom plates respectively. Air dynamic balancers may be provided around outer sides of the hydraulic cylinders respectively. The air dynamic balancers may be connected by at least one air-venting pipe. The air dynamic balancers may be in the form of air bags. The support stands may be provided with a magnetic induction switch, and magnets may be provided on corresponding positions on the outer frame support. Middle portion of the fixing rod may be provided with a counter weight.

The device of the present application uses counterweight to suspend the device in water in microgravity state. Under the action of a little force, continuous rotation of the device about rotary shafts can be achieved. During rotation, buoy is released to realize the conversion of buoyancy potential energy to hydraulic energy, A combination of a set of devices can be used to continuously press hydraulic oil into high pressure oil accumulator for direct use or for use in hydraulic generators.

### BRIEF DESCRIPTION OF THE DRAWINGS

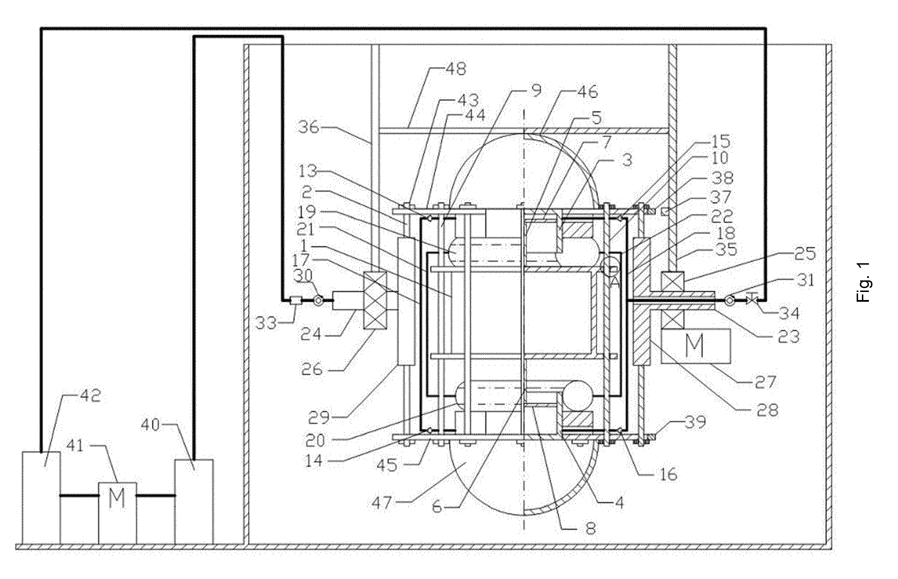

FIG. 1 is a partial sectional front view of an embodiment of the device of the present application;

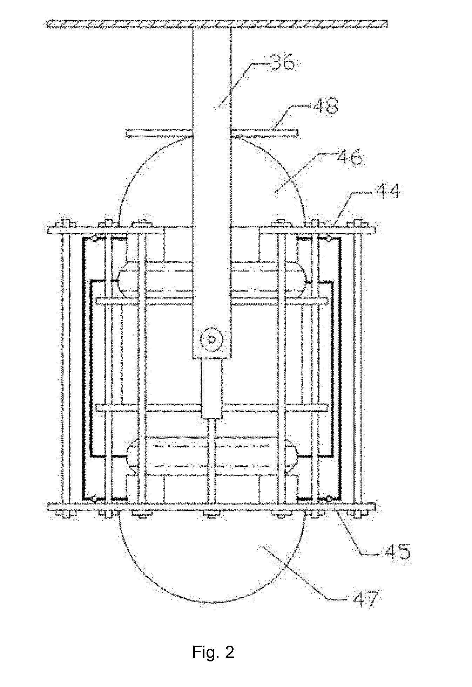

FIG. 2 is a side view of the device of the present application;

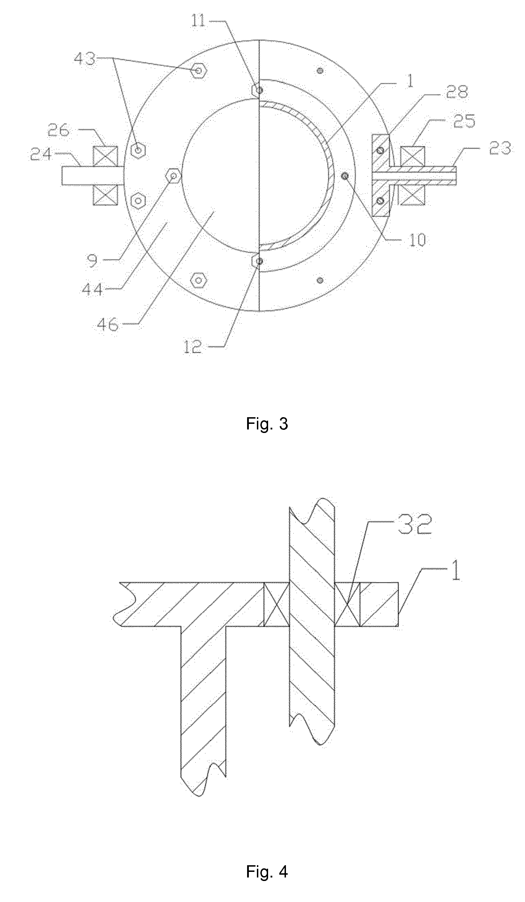

FIG. 3 is a half sectional top view of the device of the present application; and
FIG. 4 is an enlarged view of embodiment A of the present application.

### DETAILED DESCRIPTION

The device of the present application will be described in detail below with reference to an embodiment thereof.

The device of the present application may include a buoy 1, an outer frame support 2, support stands 35, 36, a power turnover mechanism 27 and a transmission mechanism. The transmission mechanism may include hydraulic cylinders 3, 4, one-way valves 13, 14, 15, 16, high pressure oil pipes 17, 18, a hydraulic oil tank 40, a hydraulic actuator 41 and a high pressure oil accumulator 42. The outer frame support 2 may have a pass-through structure. The outer frame support 2 may be provided at the periphery of the buoy 1, and formed by upper and lower bottom plates 44, 45 and a plurality of fixing rod 43. The buoy 1 can be movably connected to two pairs of guide rods 9, 10, 11, 12 provided at corresponding positions at an inner side of the outer frame support 2. An upper end and a lower end of the buoy 1 may be provided respectively with upper and lower connecting rods 5, 6, which may be connected with pistons 7, 8 of hydraulic cylinders 3, 4 provided on the upper and lower bottom plates 44, 45 of the outer frame support 2 respectively. The upper and lower bottom plates 44, 45 may further be provided with turnover buoys 46, 47. Oil inlets of the two hydraulic cylinders 3, 4 may be provided with one-way valves 13, 14 respectively. Oil outlets of the two hydraulic cylinders 3, 4 may be provided with one-way valves 15, 16 respectively. Air dynamic balancers, such as air bags 19, 20 may be provided around outer sides of the hydraulic cylinders 3, 4 respectively. The air bags 19, 20 may be connected by two air-venting pipes 21, 22. Slidable connectors 28, 29 may be slidably connected to the outer frame support 2. Rotary shafts 23, 24 can be provided on the slidable connectors 28, 29 respectively. The rotary shafts 23, 24 may be connected to support stands 35, 36 through bearings 25, 26 respectively. The rotary shafts 23, 24 may have a hollow portion. High pressure oil pipe 17 connected to the one-way valves 13, 14 may pass through the hollow portion of the rotary shaft 24 and connect with hydraulic oil tank 40 through rotary coupler 30 and flow switch 33. High pressure oil pipe 18 connected to the one-way valves 15, 16 may pass through the hollow portion of the rotary shaft 23 and connect with high pressure oil accumulator 42 through rotary coupler 31 and hydraulic control valve 34. High pressure oil pipes 17, 18 may take the form of soft pipes. Pressing plate 48 may be provided between the support stands 35, 36. The pressing plate 48 may be arc-shaped. Except for the support stands 35, 36, the weight of the entire device can be the same as the buoyancy of the buoy 1. This renders the entire device, except for the support stands 35, 36 and the arc-shaped press plate 48, to reach a suspending microgravity state in water. The power turnover mechanism 27 may be connected with the rotary shafts 23, 24. The support stand 35 may be provided with a magnetic induction switch 37. Magnets 38, 39 may be installed on corresponding positions on the outer frame support 2. Hydraulic actuator 41 can be connected with the high pressure oil accumulator 42 and the hydraulic oil tank 40 through oil pipes.

The device of the present application can be realized in the following way. When the device is running, support stands 35, 36 can be fixed in a vertical position. The entire device can be submerged in water. Except for the support stands 35, 36, the weight of the entire device can be the same as the buoyancy of the buoy 1. Except for the support stands 35, 36, the entire device can be in a suspending microgravity state. Little external force can be exerted by the power turnover mechanism 27 to drive the outer frame support 2 to rotate about the rotary shafts 23, 24. Under the action of the arc-shaped pressing plate 48, the turnover buoys 46, 47 mounted on the bottom plates 44, 45 causes the outer frame support 2 and rotary shafts 23, 24 to slide simultaneously when they are rotating. This makes the entire device in the suspending microgravity state to sink easily. When the outer frame support 2 rotates to a vertical position, the entire device sinks to the lowest position. The rotary shafts 23, 24 slide to the highest position of the outer frame support 2 by means of the slidable connectors 28, 29. At this moment, the magnet induction switch 37 receives a sensing signal from the magnet 38. The power turnover mechanism 27 stops rotating. At this moment, the buoy 1 is located at the lower half portion of the entire device. When the magnetic induction switch 37 senses the signal from the magnet 38, it opens the hydraulic control valve 34 at the same time. Under the action of the strong buoyancy, the buoy 1 moves upwards and pushes piston 7 of the hydraulic cylinder 3. Leading by the one-way valve 13, hydraulic oil is pressed into the high pressure oil accumulator 42 through high pressure oil pipe 18 and hydraulic control valve 34. At the same time, under the pulling force of the buoy 1, piston 8 of the lower hydraulic cylinder 4 is pulled. Leading by the one-way valve 14, hydraulic oil is sucked from the hydraulic oil tank 40 into the hydraulic cylinder 4 through flow switch 33 and high pressure oil pipe 17. When the buoy 1 moves to the piston near the maximum end of the journey, the upward moving force of the buoy 1 presses the air bag 19, making the air inside the air bag 19 to be discharged into air bag 20 through the two air-venting pipes 21, 22. This completes a working journey.

When the buoy 1 pushes the piston 7 of the upper hydraulic cylinder 3 to reach the maximum end of the journey, hydraulic oil stops flowing. The flow switch 33 sends out a signal. The turnover mechanism 27 starts to work, and the entire device rotates. At the same time, the magnetic induction switch 37 receives an induced signal from the magnet 38 and closes the hydraulic control valve 34 so that the buoy 1 cannot move up or down but rotate together with the outer frame support 2. The buoy 1 and the outer frame support 2 turn over together with the aid of the air-filled air bag 20 and the buoyancy of the turnover buoy 47 mounted on the bottom plate 45 as well as the little external force of the power turnover mechanism 27. When the buoy 1 and the outer frame support 2 rotate, the turnover buoy 47 mounted on the bottom plate 45 is acted upon by the arc-shaped pressing plate 48, and the outer frame support 2 and the rotary shafts 23, 24 slide when they are rotating. This makes the entire device in the suspending microgravity state to sink easily. When the entire device rotates 180 degrees to a vertical position, the entire device in the suspending microgravity state sinks to the lowest position. The rotary shafts 23, 24 slide to the highest position of the outer frame support 2 by means of the slidable connectors 28, 29. The buoy 1 is again located at the lower half portion of the entire device. The buoy 1 reaches secondary buoyancy energy storage. At this moment, the magnetic induction switch 37 receives a sensing signal from the magnet 39. The power turnover mechanism 27 stops rotating. The hydraulic control valve 34 is opened at the same time and the buoy 1 moves upwards. It then enters into the next cycle working state. As it continues, the floating buoy turnover hydraulic power output device repeats its motion and continues to generate hydraulic power.

Through the combination of a set of the devices, high pressure hydraulic oil continues to enter the high pressure oil accumulator 42. Outlet of the high pressure oil accumulator 42 connects to the hydraulic actuator 41. Hydraulic oil discharged from the hydraulic actuator 41 regulates the back pressure and returns to the hydraulic oil tank 40, and completes the close cycle system of the hydraulic oil. Hence, it completes a power transmission cycle. The power turnover mechanism 27 can adopt wind, light, electricity, hydraulic, air pressure as its power. The pressing plate 48 can take the form of a pressing rod. When the entire device rotates to a vertical position, the pressing rod can move and press the entire device downwards. This has the same technical effect of the pressing plate 48. The hydraulic actuator 41 can be a hydraulic power generator for converting hydraulic power to electrical power. The hydraulic actuator 41 can also be a hydraulic motor or a hydraulic tank for converting hydraulic power to mechanical power.

## Claims

1. A floating buoy turnover hydraulic power output device, comprising a buoy (1), an outer frame support (2), support stands (35, 36), a power turnover mechanism (27), and a transmission mechanism, **characterized in that** an upper end and a lower end of the buoy (1) are provided respectively with an upper connecting rod (5) and a lower connecting rod (6), which are connected with pistons (7, 8) of hydraulic cylinders (3, 4) provided on an upper part and a lower part of the outer frame support (2) respectively, the outer frame support (2) being provided at a periphery of the buoy (1) and formed by bottom plates (44, 45) and a plurality of fixing rod (43); the outer frame support (2) is provided with rotary shafts (23, 24), and is connected to the support stands (35, 36) through the rotary shafts (23, 24); the power turnover mechanism (27) is connected to the rotary shaft (23, 24); oil inlets and oil outlets of the hydraulic cylinders (3, 4) are respectively installed with one-way valves (13, 14, 15, 16).

2. The floating buoy turnover hydraulic power output device as claimed in claim 1, **characterized in that** the rotary shafts (23, 24) are provided on slidable connectors (28, 29) slidably connected to the outer frame support (2), and a pushing device (48) is provided between the support stands (35, 36).

3. The floating buoy turnover hydraulic power output device as claimed in claim 1 or 2, **characterized in that** the rotary shafts (23, 24) have a hollow portion, and high pressure oil pipes (17, 18) pass through the hollow portions of the rotary shafts (23, 24), and connected to a hydraulic oil tank (40) and a high pressure oil accumulator (42) through rotary couplers (30, 31) respectively.

4. The floating buoy turnover hydraulic power output device as claimed in claim 3, **characterized in that** a flow switch (33) is provided between the rotary coupler (30) and the hydraulic oil tank (40).

5. The floating buoy turnover hydraulic power output device as claimed in claim 3, **characterized in that** a hydraulic control valve (34) is provided between the rotary coupler (31) and the high pressure oil accumulator (42).

6. The floating buoy turnover hydraulic power output device as claimed in claim 1 or 2, **characterized in that** the buoy (1) is movably connected with at least a pair of guide rods (9, 10) provided on corresponding positions on an inner side of the outer frame support (2).

7. The floating buoy turnover hydraulic power output device as claimed in claim 1 or 2, **characterized in that** turnover buoys (46, 47) are provided on the bottom plates (44, 45) respectively.

8. The floating buoy turnover hydraulic power output device as claimed in claim 1 or 2, **characterized in that** air dynamic balancers (19, 20) are provided around outer sides of the hydraulic cylinders (3, 4) respectively.

9. The floating buoy turnover hydraulic power output device as claimed in claim 8, **characterized in that** the air dynamic balancers (19, 20) are connected by at least one air-venting pipe.

10. The floating buoy turnover hydraulic power output device as claimed in claim 1 or 2, **characterized in that** the support stands (35, 36) are provided with a magnetic induction switch (37), and magnets (38, 39) are provided on corresponding positions on the outer frame support (2).
